Europäisches Patentamt

European Patent Office

Office européen des brevets

(11) Numéro de publication: **0 392 935**
**A1**

## (12) DEMANDE DE BREVET EUROPEEN

(21) Numéro de dépôt: 90401039.4

(51) Int. Cl.5: **A01M 25/00, A01M 23/00**

(22) Date de dépôt: **17.04.90**

(30) Priorité: **14.04.89 FR 8905015**

(43) Date de publication de la demande:
**17.10.90 Bulletin 90/42**

(84) Etats contractants désignés:
**AT BE CH DE DK ES FR GB GR IT LI LU NL SE**

(71) Demandeur: **NIGIKO S.A.**
**29, rue Edouard Nieuport**
**F-69008 Lyon(FR)**

(72) Inventeur: **Comar, Gilles**
**78,rue du Colonel Rochebrune**
**F-92380 Garches(FR)**
Inventeur: **Comar, Nicolas**
**150bis, Boulevard de la République**
**F-92420 Vaucresson(FR)**

(74) Mandataire: **Phélip, Bruno et al**
**c/o Cabinet Harlé & Phélip 21, rue de La**
**Rochefoucauld**
**F-75009 Paris(FR)**

(54) **Piège ou boîte-appât pour rongeurs.**

(57) La boîte-appât (10) comprend trois éléments (1, 2, 3) formant volet dont deux (2, 3) sont rabattables l'un contre l'autre et solidarisables l'un à l'autre pour former avec le troisième volet (1) intermédiaire, une boîte (10) de section triangulaire ouverte à chacune de ses extrémités, la face interne (1a) du troisième volet formant réceptacle pour un produit rodonticide ou analogue.

Application à la destruction des rongeurs tels que les souris ou les rats.

FIG.1

La présente invention concerne un piège ou une boîte-appât, pour rongeurs tels que souris, rats ou analogues.

Des pièges ou boîtes-appât du genre précité existent déjà.

Le but de la présente invention est de proposer un piège ou une boîte-appât comprenant un produit rodonticide ou de la glu pré-incorporée formant ainsi un dispositif prêt à l'emploi et qui soit d'utilisation fiable.

En particulier, le dispositif proposé par l'invention permet à un utilisateur d'éviter tout contact avec le produit rodonticide ou la glu.

Ainsi, le piège ou la boîte-appât conforme à l'invention, pour rongeurs tels que souris, rats ou analogues, comporte trois éléments formant volet dont deux sont rabattables l'un contre l'autre et solidarisables l'un à l'autre pour former avec le troisième volet intermédiaire une boîte de section triangulaire ouverte à chacune de ses extrémités, la face interne d'un des volets formant réceptacle pour un produit rodenticide ou de la glu, le volet dont la face forme réceptacle étant le troisième volet ou volet intermédiaire, les deux autres volets étant articulés latéralement sur ledit volet intermédiaire.

La mise en place de cette boîte peut être effectuée par simple manipulation des volets latéraux, alors que les dispositifs habituels de l'état de la technique, dont font état notamment les documents DE-A-2111022, US-A-4244134, US-A-4425731 et US-A-4385465, nécessitent pour leur mise en place une manipulation directe du volet, qui sert de fond au réceptacle, avec risque de contact avec le produit rodonticide ou la glu.

Le piège selon l'invention est avantageusement réalisé par injection, extrusion ou toute autre technique de moulage de matériau thermodurcissable ou thermoplastique, en carton ou métal.

Le volet formant réceptacle est de préférence obturé par un opercule amovible formant couvercle en position de stockage de la boîte. Cet opercule permet également d'améliorer la sécurité des manipulations. En outre, le produit rodenticide ou la glu ne sont pas altérés et conservent leur efficacité.

Les volets rabattables sont de façon avantageuse solidarisés par au moins un organe formant clip issu de matière avec la boîte.

Le piège selon l'invention présente également l'avantage d'être jetable après usage et de pouvoir contenir un produit rodonticide se présentant sous la forme d'une pâte ou sous tout autre forme.

On sait à cet égard que les produits utilisés habituellement pour la lutte contre les animaux nuisibles consistent en des préparations toxiques qui comprennent le plus généralement un principe actif associé à un véhicule ou excipient, lequel peut comprendre un mélange appétent et des matières inertes. Ainsi, les produits rodonticides usuels consistent en des appâts se présentant sous une forme solide ou liquide. Il s'agit surtout de poudres, de mélanges de farines, de céréales, broyées ou non, de granulés de toutes formes (bouchons, cubes, comprimés .... ), d'aliments composés agglomérés, de céréales imprégnées ou laquées ou de préparations liquides.

Les appâts présentés sous forme solide peuvent être dispersés par le rongeur lui-même au cours de sa fréquentation ou tout simplement en raison d'un phénomène physique extérieur, tel qu'un courant d'air, résultant de l'ouverture d'une porte ou d'une fenêtre, ou tout simplement du chauffage des locaux par air pulsé ou d'une aération ventilée. Qu'ils soient présentés sous forme physique ou liquide, les appâts conventionnels peuvent de toutes façons être renversés et disséminés aux alentours. Dans tous les cas, ils présentent alors un danger potentiel pour l'espace environnant.

Le produit rodonticide du piège proposé par l'invention présente l'avantage de rester en place sans pouvoir être dispersé soit par les animaux nuisibles soit par des phénomènes extérieurs.

Pour résoudre ce problème, l'invention propose d'utiliser un produit pour la lutte contre les animaux nuisibles, contenant au moins une substance toxique associée aux constituants usuels dans ce type de produit, tels que des composants appétents et/ou des matières inertes, ledit produit étant caractérisé en ce qu'il a la forme et la consistance d'une pâte à la température ambiante.

La forme de pâte, proposée par l'invention, est spécialement bien adaptée à la présentation d'un appât toxique pour les animaux nuisibles tels que les rongeurs.

La substance toxique peut être choisie parmi n'importe lequel des agents toxiques utilisés dans ce type de produit. Il peut s'agir d'un agent unique ou d'un mélange de tels agents, le cas échéant, en association avec d'autres constituants pouvant exercer un effet de synergie. Des indications sont fournies ci-après sur les agents toxiques utilisables mais l'énumération qui suit n'est aucunement limitative et l'homme du métier dispose de toutes les informations à cet égard, par exemple en se reportant à l'ouvrage Index Phytosanitaire, publié chaque année par l'Association de Coordination Technique Agricole (ACTA) 149, rue de Bercy 75595 PARIS CEDEX 12.

Fréquemment l'agent toxique utilisé possède une activité anti-coagulante entraînant la mort de l'animal par asphyxie. On peut citer à cet égard les dérivés de l'indane, tels le chlorophacinone, le diphacinone, les dérivés de la coumarine, tels que coumafène, coumatétralyl, bromadiolone, brodifacoum, les dérivés des· benzothiopyranones, par exemple le difethialone. On peut aussi utiliser des composés appartenant à la famille des vitamines D, tels que le calciférol ou le cholécalciférol. D'autres agents toxiques utilisables dans le produit de l'invention peuvent être obtenus par synthèse organique, par exemple le glucochloral. L'agent toxique peut encore être issu de la variété rouge de la scille marine, par exemple le scilliroside. Il peut aussi appartenir à la famille des méthyl-6-pyrimidines, par exemple la crimidine.

Dans la description qui précède, on a décrit les agents toxiques pouvant être mis en oeuvre par référence à leurs désignations chimiques, leurs dénominations communes internationales ou leurs applications commerciales, ces dernières étant bien connues de l'homme du métier.

On a a également dit plus haut que la toxicité de l'appat pouvait résulter d'un mélange de tels agents ou, le cas échéant de l'addition de composants exerçant un effet synergique. A titre d'exemple d'association synergique, on peut citer celle qui est décrite dans la demande de brevet déposée le même jour au nom de la Demanderesse, et ayant pour titre: "Rodonticide", celle-ci comprenant au moins une vitamine D et une quantité synergique d'acide acétylsalicylique ou d'un de leurs dérivés ou de leurs sels.

Par ailleurs, le produit de l'invention comprend d'autres constituants usuels, tels que des composants appétents et des matières inertes. Les composants appétents peuvent être choisis par exemple parmi les farines de céréales, les déchets de meunerie, les farines de poisson, la farine de viande, les grains entiers ou concassés, les céréales broyées, les huiles d'origine végétale, les glucides, les protéines, les poudres de lait, seules ou en mélange. Les matières inertes habituellement mises en oeuvre sont des poudres, telles que le talc, le kaolin et autres matières analogues. De manière classique le produit peut également comprendre des conservateurs, des colorants et/ou des antioxydants.

Selon une caractéristique essentielle de la présente invention, le produit comprend en outre un constituant capable de lui conférer la forme et la consistance d'une pâte à la température ambiante. Il convient également que ladite pâte soit stable dans le temps, et notamment qu'elle ne contienne pas une proportion excessive de composants capables de s'évaporer dans les conditions normales d'utilisation. On donne la préférence aux corps gras, de toutes origines, seuls ou en mélan ge, solides ou semi-solides à la température ambiante. Il s'agit avantageusement de graisses, comme des dérivés suifés ou paraffinés.

Les proportions relatives des constituants gras, par rapport aux autres constituants du produit de l'invention peuvent varier dans de larges limites, selon la nature de ces constituants respectifs. Ainsi, la proportion des corps gras dans le produit final peut aller de 10% à 90% environ en poids total du mélange et de préférence représenter entre 25 et 75% de celui-ci.

On a constaté que, dans les conditions d'utilisation normales, le produit de l'invention avait au moins le même pouvoir attractif et la même appétence vis-à-vis des animaux nuisibles qu'un produit identique mais présenté sous forme pulvérulente, c'est-à-dire ne contenant pas le constituant pâteux ou gras.

Le produit de l'invention peut être utilisé dans tout endroit où il faut éviter une dissémination accidentelle de l'appât toxique. La forme et la consistance de la pâte conviennent particulièrement bien à cet effet.

Le produit pâteux selon l'invention se prête également à un conditionnement en tube ou cartouche avec pistolet extrudeur et autres moyens permettant d'appliquer mécaniquement et de délivrer de petites quantités d'appât, soit à l'intérieur de cavités, soit directement sur des rebords ou des passages des animaux, les applications étant faites à des intervalles suffisamment rapprochés pour que les animaux absorbent la préparation pâteuse de préférence à d'autres nourritures disponibles.

D'autres caractéristiques et avantages de l'invention ressortiront encore de la description qui va suivre.

Aux dessins annexés donnés à titre d'exemples non limitatifs:

La Figure 1 est une vue en perspective d'une boîte-appât conforme à l'invention, et

La Figure 2 est une coupe transversale de la boîte-appât selon la Figure 1 en position d'utilisation.

Le piège ou boîte-appât pour rongeurs, tels que souris ou analogues, représenté aux dessins annexés, comprend essentiellement trois éléments articulés l'un à l'autre 1, 2, 3 formant volets, les deux éléments d'extrémité 2, 3 étant rabattables l'un contre l'autre de manière que leurs bords extérieurs respectivement 2a, 3a puissent être solidarisés l'un à l'autre pour former avec le troisième volet intermédiaire 1 une boîte 10 de section triangulaire ouverte à chacune de ses extrémités.

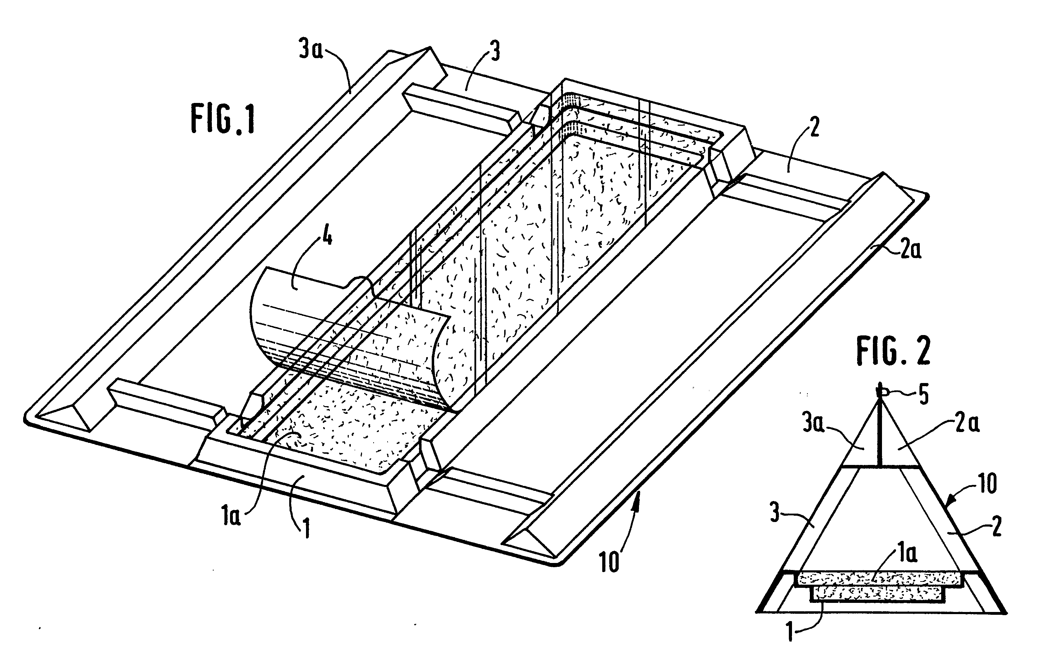

Selon une première caractéristique avantageuse de l'invention, les volets rabattables 2, 3 sont solidarisés par au moins un organe formant clip 5 (voir Figure 2), de préférence au nombre de deux, qui sont issus de matière avec la boîte 10.

Selon une autre caractéristique avantageuse de l'invention, la face interne 1a du troisième volet intermédiaire 1 est conçue pour former un réceptacle destiné à recevoir un produit rodenticide ou analogue qui peut se présenter par exemple sous la forme de poudre, de granulés, de bouchons, de cubes, de comprimés, d'aliments composés agglomérés, de céréales imprégnées, de préparation liquide, d'une pâte de semoule, de grains entiers ou concassés ou de céréales laquées.

Selon une caractéristique préférentielle de l'invention, le volet 1 formant réceptacle est obturé, en position de stockage représentée à la Figure 1, par un opercule amovible 4 qui forme couvercle en position de stockage de la boîte 10 et qui est bien entendu aisément retiré avant la mise en oeuvre de la boîte 10 telle que décrite ci-dessus.

Selon d'autres caractéristiques de l'invention, la boîte 10 est de préférence réalisée en matériau thermoplastique tel que PVC ou analogue, par thermoformage, et cette boîte 10 présente l'avantage de pouvoir être jetée après usage.

L'avantage de la boîte-appât 10 conforme à l'invention est de constituer un dispositif prêt à l'emploi et de grande sécurité d'emploi. Ainsi, avant ouverture, l'appât contenu dans le réceptacle de l'élément intermédiaire 1 peut être stocké sans altération et conserver ainsi son efficacité tandis que la boîte 10 peut être transportée et manipulée sans risque pour les utilisateurs. Après ouverture du réceptacle de l'élément 1, il n'y a pas de manipulation directe de l'appât par l'utilisateur tandis que cet appât n'est pas mis directement au contact du sol ou d'un autre support.

Des variantes de réalisation de la boîte précitée sont possibles.

Ainsi, l'appât toxique peut être remplacé par de la glu. En outre, le piège ou la boîte-appât peut présenter d'autres formes que la forme triangulaire décrite précédemment. Ainsi, le piège pourrait être de forme parallélépipédique ou encore comprendre un élément formant réceptacle recouvert d'un élément unique en forme de voûte.

A titre complémentaire on a également donné ci-après un exemple concret d'un produit rodonticide utilisable dans un tel piège.

## EXEMPLE

On a réalisé un produit conforme à l'invention en mélangeant de façon homogène 37% en poids de suif raffiné et 63% en poids d'un mélange pulvérulent toxique ayant la composition centésimale ci-après:

chapelure 75
millet 15
calciférol 2,5
colorant 0,5
huile maïs 2

$$\left.\begin{array}{l} \texttt{talc} \\ \texttt{coumafène} \\ \texttt{antioxydant} \end{array}\right]\ 5$$

Bien entendu cet exemple n'est donné qu'à titre illustratif. L'homme du métier peut adapter sans difficulté le produit pâteux à obtenir selon la nature de ses constituants. Ainsi, pour un produit raticide, la préparation toxique peut consister en une association synergique d'une vitamine D, telle que le cholécalciférol et d'acide acétylsalicylique.

Ainsi qu'on l'a indiqué précédemment, les proportions relatives des constituants au sein du produit peuvent varier, le ou les corps gras pouvant représenter de 10 à 90% en poids du produit final, notamment selon la nature des corps gras et autres constituants du produit. On a constaté que, en dessous d'une proportion de l'ordre de 10% en poids, le mélange n'était pas suffisamment consistant et homogène pour maintenir emprisonnés les autres constituants surtout si ceux-ci sont largement pulvérulents. Au-delà de 90% en poids de corps gras, le produit n'est pas suffisamment appétent pour que le mélange pâteux soit consommé effectivement par les animaux. Des essais de routine permettent d'aboutir au compromis satisfaisant, qui se situe, comme indiqué, entre 25 et 75% de corps gras par rapport au produit final, toutes ces proportions étant indiquées en poids.

Les signes de référence insérés après les caractéristiques techniques mentionnées dans les revendications, ont pour seul but de faciliter la compréhension de ces dernières, et n'en limitent aucunement la portée.

## Revendications

1. Piège ou boîte-appât, pour rongeurs tels que souris, rats ou analogues, comportant trois éléments (1, 2, 3) formant volet dont deux (2, 3) sont rabattables l'un contre l'autre et solidarisables l'un après l'autre pour former avec le troisième volet (1) intermédiaire une boîte (10) de section triangulaire ouverte à chacune de ses extrémités la face interne (1a) d'un des volets formant réceptacle pour un produit rodenticide ou de la glu, caractérisé en ce que le volet dont la face forme réceptacle est le troisième volet ou volet intermédiaire, les deux autres volets étant articulés latéralement sur ledit volet intermédiaire.

2. Piège selon la revendication 1, caractérisé en ce qu'il est réalisé par injection, extrusion ou toute autre technique de moulage de matériau thermodurcissable ou thermoplastique, en carton ou métal.

7      EP 0 392 935 A1      8

3. Piège selon l'une des revendications précédentes, caractérisé en ce que le volet (1) formant réceptacle est obturé par un opercule amovible (4) formant couvercle en position de stockage de la boîte (10).

4. Piège selon l'une des revendications précédentes, caractérisé en ce que les volets rabattables (2, 3) sont solidarisés par au moins un organe formant clip (5) issu de matière avec la boîte (20).

5. Piège selon l'une des revendications précédentes, caractérisé en ce qu'il est jetable après usage.

6. Piège selon l'une des revendications précédentes, caractérisé en ce que le produit ro donticide contient au moins une substance toxique associée aux constituants usuels dans ce type de produit, tels que des composants appétents et/ou des matières inertes, ledit produit ayant la forme et la consistance d'une pâte à la température ambiante.

7. Piège selon la revendication 6, caractérisé en ce que la forme et la consistance pâteuse du produit rodonticide sont obtenues par incorporation de corps gras, seuls ou en mélange, solides ou semi-solides à la température ambiante.

8. Piège selon l'une des revendications 6 ou 7, caractérisé en ce que le produit contient des graisses ou des dérivés suifés ou paraffinés.

9. Produit selon l'une quelconque des revendications 6 à 8, caractérisé en ce que la proportion de corps gras peut varier de 10 à 90% en poids environ par rapport au poids total du produit et de préférence représenter entre 25 et 75% en poids de celui-ci.

5

FIG.1

FIG. 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| D,X | DE-A-2111022 (H.REINELT)<br>* page 5, alinéa 1 - page 6, alinéa 2; revendication 11; figures 2-3 * | 1-2 | A01M25/00<br>A01M23/00 |
| A | | 5-9 | |
| D,X | US-A-4244134 (H.J.OTTERSON)<br>* colonne 7, ligne 34 - colonne 8, ligne 63; figures 5-10 * | 1-2, 4-6 | |
| D,X | US-A-4425731 (J.ORLANDO)<br>* colonne 4, ligne 57 - colonne 5, ligne 61; figures 1-5 * | 1-2, 4 | |
| D,X | US-A-4385465 (J.J.PALMERI)<br>* colonne 2, ligne 28 - colonne 3, ligne 49; figures 1-6 * | 1-5 | |
| A | FR-A-1402847 (A.ARNOULD) | | |
| A | AU-A-483860 (EARTH CHEMICAL COMPANY LTD.) | | |

**DOMAINES TECHNIQUES RECHERCHES (Int. Cl.5 )**

A01M

Le présent rapport a été établi pour toutes les revendications

| Lieu de la recherche | Date d'achèvement de la recherche | Examinateur |
|---|---|---|
| LA HAYE | 19 JUILLET 1990 | NEHRDICH H.J |